# EUROPÄISCHE PATENTSCHRIFT

(11) **EP 1 197 690 B1**
(45) Veröffentlichungstag und Bekanntmachung des Hinweises auf die Patenterteilung: **16.10.2002**
(21) Anmeldenummer: 00122199.3
(22) Anmeldetag: 13.10.2000
(51) Int. Cl.: F16J 15/32

(54) **Dichtlippe eines Wellendichtringes**
Sealing lip of a shaft seal
Lèvre d'étanchéité de joint pour arbre

(43) Veröffentlichungstag der Anmeldung: 17.04.2002
(73) Patentinhaber: Ford Global Technologies, Inc., A subsidiary of Ford Motor Company, Dearborn, Michigan 48126 (US)
(72) Erfinder: Kuhlen, Morten, 41238 Mönchengladbach (DE)
(74) Vertreter: Drömer, Hans-Carsten, Dipl.-Ing.

(56) Entgegenhaltungen:
- EP-A- 0 980 998
- EP-A- 1 004 801
- DE-A- 19 912 135
- US-A- 2 750 212
- US-A- 5 082 294
- PATENT ABSTRACTS OF JAPAN vol. 008, no. 104 (M-296), 16. Mai 1984 (1984-05-16) & JP 59 017068 A (TOKYO SHIBAURA DENKI KK), 28. Januar 1984 (1984-01-28)

## Beschreibung

Die Erfindung bezieht sich auf eine Dichtlippe eines Wellehdichtringes der im Oberbegriff des Patentanspruches 1 erläuterten Art.

Eine gattungsbildende Dichtlippe eines Wellendichtringes ist aus der EP 0 980 998 bekannt. Der Radialwellendichtring weist eine Dichtlippe aus polymerem Werkstoff auf, die radial innenseitig axial in Richtung eines abzudichtenden Raumes vorgewölbt ist und eine abzudichtende Welle umfangsseitig dichtend umschließt. Auf der der Welle zugewandten Seite weist die Dichtlippe eine Oberflächenprofilierung in Form sägezahnförmiger Ausnehmungen auf, die eine schraubenförmige Rückfördemut bilden. Aufgabe der Rückfördemut ist es, bei drehender Welle Leckageflüssigkeiten zurück in den abzudichtenden Bereich zu fördern, dies sind z. B. Schmiermittel bei Verwendung des Wellendichtringes in Verbrennungskraftmaschinen.

Das Problem eines solchen Wellendichtringes besteht darin, daß das in der Rückfördernut der schraubenförmigen Dichtkante befindliche Schmiermittel für einen relativ langen Zeitraum in dieser Nut verbleibt und, da die auftretende Reibung mit der abzudichtenden Welle die Schmiermitteltemperatur in dieser Nut stark erhöht, zum Verkoken neigt. Die dadurch entstehenden Ablagerungen in der Rückfördernut und an der Welle beeinträchtigen die einwandfreie Funktion des Wellendichtringes. Dies tritt vor allem an Kurbelwellen von Verbrennungskraftmaschinen auf, wenn sehr hohe Betriebstemperaturen vorliegen.

Die Aufgabe der Erfindung ist es, eine Dichtlippe eines Wellendichtringes der im Oberbegriff des Patentanspruches 1 erläuterten Art derart zu verbessern, daß das auftretende Problem der Verkokung des Schmiermittels, das zur Bildung von Ablagerungen führt, verringert wird.

Gelöst wird diese Aufgabe, indem die Dichtlippe aus einem Elastomermaterial besteht, dem wärmeleitende Zusatzstoffe beigemengt sind. Die Wärmeleitfähigkeit des Elastomermaterials wird durch die wärmeleitenden Zusatzstoffe wesentlich erhöht. Dadurch kann die entstehende Reibungswärme des Schmiermittels in der Rückfördernut wesentlich effektiver abgeführt werden. Der Wärmeisoliereffekt, der bei einer Dichtlippe aus reinem Elastomermaterial wie PTFE auftritt, wird vermieden, so daß die Temperatur des Schmiermittels nur unwesentlich über der Betriebstemperatur des Schmiermittels im Gehäuseinnenraum liegt.

Weitere Einzeilheite und Ausführungsformen sind den zeichnerischen Darstellungen zu entnehmen. Es zeigt:

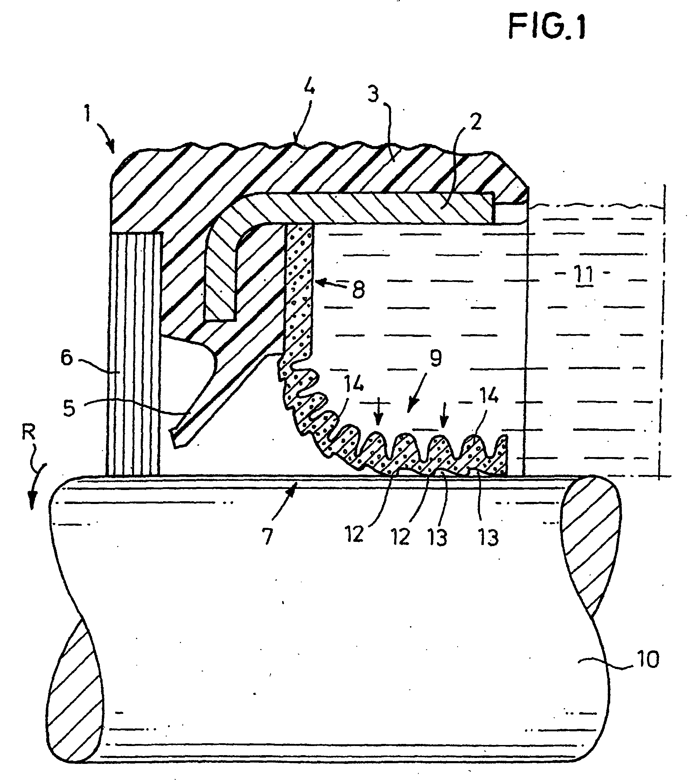

- Fig. 1: einen Querschnitt durch einen Wellendichtring.

Der in Fig. 1 im Teilschnitt prinzipiell gezeigte Wellendichtring 1 besteht im wesentlichen aus einer tragenden Blechhülse 2, die von einem Mantel 3 aus Elastomermaterial umgeben ist, über dessen Außenumfang 4 der Wellendichtring 1 in die entsprechende Aufnahmebohrung eines Maschinengehäuses eingesetzt wird. Das Elastomermaterial des Mantels 3 kann hierbei gleichzeitig eine nach außen weisende Staublippe 5 bilden, vor der nach außen hin noch eine Vließscheibe 6 zum zusätzlichen Verhindern von Staub- und Schmutzeintritt vorgesehen sein kann.

Eine Dichtmanschette 7 weist ein radiales Basisteil 8, welches an dem Elastomermaterial der Staublippe 5 befestigt ist, und eine Dichtlippe 9, die sich bogen-hülsenförmig über die abzudichtende Welle 10 erstreckt, auf. Die Dichtlippe 9 weist zum abzudichtenden Bereich, dem Gehäuseinnenraum 11, der mit Schmiermittel beaufschlagt ist, eine wellenförmigen Querschnitt auf. An ihrem Innenumfang, zur abzudichtenden Welle 10 hin, weist die Dichtlippe 9 eine sich schraubenförmig erstreckende Dichtkante 12 auf, deren Schraubengänge zusammen mit der Welle 10 eine Rückfördemut 13 für das Schmiermittel bilden. Die schraubenförmige Dichtkante 12 weist eine Drehsinn auf derart, daß wenn die Welle sich in die eingezeichnete Drehrichtung R dreht, das in der Rückfördemut 13 befindliche Schmiermittel in Richtung des Gehäuseinnenraumes 11 gefördert wird, somit also der Schmiermittelaustritt an der Dichtlippe 9 bei Drehung der Welle 10 aktiv verhindert wird.

Damit ist zwar die Abdichtung gewährleistet, jedoch wird das im Schraubengang der Rückfördernut 13 befindliche Schmiermittel, abhängig vom Schmiermittelangebot, u.U. nicht erneuert und führt durch Einwirkung von Hitze, hervorgerufen durch die Reibung zwischen Dichtlippe 9 und Welle 10, zu Alterung und damit zum Verkoken, wodurch feste Ablagerungen in der Rückfördemut 13 und auf der Welle 10 entstehen können. Diese Ablagerungen, die in unregelmäßiger Form entstehen, führen zu einer Beeinträchtigung der ordnungsgemäßen Dichtwirkung der schraubenförmigen Dichtkante 12.

Gemäß der Erfindung wird daher vorgeschlagen, zur besseren Hitzeabfuhr dem Elastomermaterial der Dichtlippe 9 wärmeleitenden Zusatzstoffe 14 beizumengen. Eine bessere Hitzeabfuhr bewirkt, daß das Schmiermittel in der Rückfördemut kühler bleibt und damit die Neigung zum Verkoken reduziert ist.

Üblicherweise werden derartige Dichtmanschetten 7 aus PTFE hergestellt, was aber eine nur sehr geringe Wärmeleitfähigkeit aufweist. Durch die Beimengung der wärmeleitenden Zusatzstoffe 14 wie z. B. Metallpuder erhöht sich die Wärmeleitfähigkeit der erfindungsgemäßen Dichttippe 9 entscheidend gegenüber einer Dichtlippe aus reinem PTFE. Dabei können die Zusatzstoffe dem Elastomermaterial der gesamten Dichtmanschette 7 beigemengt sein; die Beimengung kann sich jedoch auch nur auf den Bereich der Dichtlippe 9 beschränken, so daß das radiale Basisteil 8 andere Materialeigenschaften aufweist als die Dichtlippe 9.

## Patentansprüche

1. Dichtlippe (9) eines Weltendichtringes (1), die an ihrem zu einer Welle (10) liegenden Innenumfang mit einer schraubenförmigen Dichtkante (12) versehen ist, die eine entsprechende schraubenförmige Rückfördemut (13) bildet,
**dadurch gekennzeichnet, daß**
die Dichtlippe (9) aus einem Elastomermaterial besteht, dem wärmeleitenden Zusatzstoffe (14) beigemengt sind.

## Claims

1. Sealing lip (9) of a radial shaft seal (1) which, on its inner circumference which lies towards a shaft (10), is provided with a helical sealing edge (12) which forms a corresponding helical return groove (13), **characterized in that** the sealing lip (9) consists of an elastomer material to which thermally conductive additives (14) have been admixed.

## Revendications

1. Lèvre d'étanchéité (9) d'un joint pour arbre (1), qui est pourvue sur sa périphérie interne dirigée vers un arbre (10) d'une arête d'étanchéité de forme hélicoïdale (12), qui forme une rainure de refoulement de forme hélicoïdale correspondante (13),
**caractérisée en ce que** la lèvre d'étanchéité (9) se compose d'un matériau élastomère auquel sont mélangées des substances supplémentaires (14) conductrices de la chaleur.
